(19) Europäisches Patentamt
European Patent Office
Office européen des brevets

(11) EP 3 710 518 B1

(12) FASCICULE DE BREVET EUROPEEN

(45) Date de publication et mention de la délivrance du brevet:
**13.03.2024 Bulletin 2024/11**

(21) Numéro de dépôt: **18827164.7**

(22) Date de dépôt: **16.11.2018**

(51) Classification Internationale des Brevets (IPC):
***C08G 69/40*** *(2006.01)* ***C08G 69/48*** *(2006.01)*
***C09D 177/00*** *(2006.01)* ***C08J 5/18*** *(2006.01)*

(52) Classification Coopérative des Brevets (CPC):
**C08J 5/18; C08G 69/40; C08G 69/48;**
**C09D 177/00;** C08J 2379/08

(86) Numéro de dépôt international:
**PCT/FR2018/052877**

(87) Numéro de publication internationale:
**WO 2019/097184 (23.05.2019 Gazette 2019/21)**

# (54) FILM IMPER-RESPIRANT SOUPLE ET ÉTIRABLE A BASE DE COPOLYMÈRE A BLOCS

DEHNBARE, FLEXIBLE, WASSERDICHTE UND ATMUNGSAKTIVE FOLIE AUF BLOCKCOPOLYMERBASIS

BLOCK-COPOLYMER-BASED STRETCHABLE, FLEXIBLE, WATERPROOF AND BREATHABLE FILM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2017 FR 1760883**

(43) Date de publication de la demande:
**23.09.2020 Bulletin 2020/39**

(73) Titulaire: **Arkema France**
**92700 Colombes (FR)**

(72) Inventeurs:
- **COCQUET, Clio**
**27300 Bernay (FR)**
- **PINEAU, Quentin**
**27000 Evreux (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**US-A- 5 360 888**
**US-A1- 2010 003 486**
**US-A1- 2016 229 966**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

DOMAINE DE L'INVENTION

La présente invention concerne des films imper-respirants à base de copolymères à blocs, perméables à la vapeur d'eau et imperméables à l'eau. Ces films sont utilisables notamment dans le domaine alimentaire, l'emballage, l'équipement sportif, ou dans le bâtiment, notamment comme matériau d'isolation sous la toiture des habitations et pour l'isolation des murs.

Dans ces domaines, il est important de pouvoir disposer de films à la fois souples, étirables, solides c'est-à-dire résistants à la déchirure, résistants à l'abrasion, recyclables et présentant une perméabilité à la vapeur d'eau suffisante.

La perméabilité à la vapeur d'eau est évaluée à l'aide du paramètre MVTR (Moisture Vapor Transmission Rate). En particulier, il est souhaitable qu'un film imper-respirant présente une valeur de MVTR mesurée par la norme ASTM E96, d'au moins 100 g/m2 par 24 heures à 23°C pour un taux d'humidité relative de 50% et une épaisseur d'échantillon de 30 $\mu$m. Dans certains copolymères à blocs, une augmentation de la teneur en groupements polyéther permet d'augmenter la perméabilité à la vapeur d'eau de ces copolymères.

La présente invention a pour but d'améliorer la souplesse, l'étirabilité, la solidité de ces films et leur résistance à l'abrasion, sans modifier leur perméabilité à la vapeur d'eau.

La souplesse est évaluée à l'aide des modules : module en traction selon la norme ISO 527 1A:2012, et module en flexion à 23°C selon la norme ISO 178:2010. Une diminution de ces modules va dans le sens d'une meilleure souplesse des films.

L'étirabilité est évaluée à l'aide du test de rhéologie élongationnelle, tel que défini ci-après dans les exemples de la présente demande.

La résistance à l'abrasion est évaluée par la perte de masse selon la norme ISO 527-1A:2012 : plus faible est la perte de masse du matériau, meilleure est la résistance à l'abrasion des films constitués de ce matériau.

La résistance à la déchirure est quant à elle est évaluée selon la norme ISO 34-1 :2015.

Parmi les copolymères à blocs connus pour la fabrication de films imper-respirants, on peut citer les copolymères à blocs polyamide et blocs polyéther (PEBA). Ces PEBA appartiennent à la classe particulière des polyétheresteramides lorsqu'ils résultent de la copolycondensation de séquences polyamide à extrémités carboxyliques réactives avec des séquences polyéther à extrémités réactives, qui sont des polyétherpolyols (polyétherdiols), les liaisons entre les blocs polyamide et les blocs souples polyéther étant des liaisons ester.

On peut citer par exemple US 2010/003486 ou US 2016/229966 qui décrit des films imper-respirants à base des copolymères PEBA.

Les PEBA sont connus pour leurs propriétés physiques telles que leur flexibilité, leur tenue au choc, et leur facilité de mise en oeuvre par injection. Toutefois, ces copolymères sont délicats à transformer sous forme de film par extrusion, notamment en raison d'une faible viscosité à l'état fondu et d'une faible résistance à l'état fondu (melt strength) qui en résulte.

Il existe différents moyens de moduler la viscosité à l'état fondu d'un polymère.

Ainsi, il peut être envisagé d'augmenter le taux de polyamide, ce qui tend à augmenter la viscosité. Par ailleurs, on peut obtenir des compositions polymères extrudables par compoundage du copolymère à blocs avec d'autres polymères, notamment des polyoléfines. Mais dans les deux cas, cela fait baisser le taux de PEG global présent dans la composition polymère et réduit de ce fait sa perméabilité à la vapeur d'eau.

Il est également possible d'augmenter la viscosité à l'état fondu en allongeant les chaînes du polymère, par exemple en prolongeant la polymérisation. Cette approche a été décevante en raison de la dégradation des blocs PEG, laquelle entraîne en outre à une coloration (jaunissement) du matériau, sans pouvoir atteindre les niveaux souhaités de viscosité à l'état fondu, d'au moins 300 Pa.s, mesurée selon la norme ISO 1621-10 : 2015.

Enfin, on peut envisager d'augmenter la viscosité à l'état fondu en augmentant simultanément la taille des différents blocs du polymère, par exemple des blocs polyamide et des blocs polyéther dans le cas du PEBA. Par exemple, en passant pour un PEBA PA6-PEG, de 1500-1500 à 2000-2000, il devrait être possible d'augmenter la viscosité à l'état fondu à degré de polymérisation équivalent, sans dégrader les propriétés de perméabilité à la vapeur d'eau. Les essais conduits dans ce sens n'ont toutefois pas abouti : la réactivité entre les blocs PA et les blocs PEG est fortement réduite.

L'invention a donc également pour but de fournir un procédé amélioré de fabrication de films imper-respirants, étirables et souples à base de copolymères à blocs, dans lequel l'extrusion est facilitée et les vitesses maximales d'extrusion atteignables augmentées.

La demanderesse a maintenant trouvé que l'utilisation, dans certaines conditions, d'un polycarbodiimide dans un procédé de fabrication de film à base copolymère à blocs polyamides et blocs souples comportant au moins une fin de chaîne acide carboxylique, permettait d'améliorer de manière significative la capacité d'étirement dudit copolymère sous forme de film et/ou d'augmenter la vitesse d'extrusion dudit copolymère, tout en améliorant l'étirabilité du film ainsi

obtenu, la souplesse du film, sa résistance à l'abrasion, et sa résistance à la déchirure, sans sacrifier la perméabilité à la vapeur d'eau du film obtenu, ni sa recyclabilité.

DESCRIPTION DE MODES DE REALISATION DE L'INVENTION

Dans la présente description, on précise que lorsqu'il est fait référence à des intervalles, les expressions du type « allant de... à » ou « comportant/comprenant de... à » incluent les bornes de l'intervalle. A l'inverse, les expressions du type « compris entre... et... » excluent les bornes de l'intervalle.

Sauf mention contraire, les pourcentages exprimés sont des pourcentages massiques. Sauf mention contraire, les paramètres auxquels il est fait référence sont mesurés à pression atmosphérique, et température ambiante (20-25°C, généralement 23°C).

L'invention est maintenant décrite en détail et de façon non limitative dans la description qui suit.

L'invention a donc pour objet un film souple, étirable et imper-respirant à base de copolymère à blocs comprenant au moins un bloc rigide polyamide PA et au moins un bloc souple choisi parmi : polyéther, polyester, polydiméthylsiloxane, polyoléfine, polycarbonate, et leurs mélanges ou copolymères, caractérisé en ce que ledit copolymère comporte au moins une fin de chaîne acide carboxylique bloquée par un polycarbodiimide.

Dans la présente description, on précise que le film « à base de copolymère » signifie que le film comprend au moins 51% en poids de copolymère sur le poids total du film.

De préférence, le film selon l'invention comprend au moins 60% en poids dudit copolymère tel que défini par l'invention. De préférence il contient au moins 70% en poids, de préférence au moins 80%, voire au moins 90%, ou mieux au moins 95%, en poids de copolymère tel que défini ci-après par l'invention, sur le poids total du film.

Le copolymère à blocs rigides polyamide PA et blocs souples ainsi défini selon l'invention fait partie des polymères thermoplastiques élastomères. Le terme « polymère thermoplastique élastomère », abrégé « TPE », désigne un polymère qui constitue un matériau polyphasique présentant au moins deux transitions, à savoir une première transition à une température T1 (en général il s'agit de la température de transition vitreuse) et une deuxième transition à une température T2 supérieure à T1 (en général il s'agit du point de fusion). A une température inférieure à T1, le matériau est rigide, entre T1 et T2 il a un comportement élastique, et au-dessus de T2 il est fondu. Un tel polymère combine le comportement élastique des matériaux de type caoutchouc avec l'aptitude à la transformation des thermoplastique.

Un élastomère thermoplastique sur base polyamide (TPE-A) au sens de l'invention, tel qu'un PEBA, est un copolymère à blocs comprenant un enchaînement de blocs, alternativement rigides ou durs (BD) et souples ou mous (BM), selon la formule générale suivante :

-[BD-BM]n-

et dans laquelle :

- BD ou Bloc Dur ou bloc rigide : représente un bloc comprenant du polyamide (homopolyamide ou copolyamide) ou un mélange de blocs comprenant du polyamide (homopolyamide ou copolyamide), ci-après abrégé indépendamment bloc PA ou BD ;
- BM ou Bloc Mou ou encore bloc souple : représente un bloc à base de polyéther (bloc PE), de polyester (bloc PES), de polydiméthylsiloxane (bloc PDMS), de polyoléfine (bloc PO), de polycarbonate (bloc PC) et/ou de tout autre polymère de faible température de transition vitreuse, ou de leurs mélanges sous forme de copolymères alternés, statistiques ou à blocs. De préférence, BM est un bloc à base de polyéther comportant des motifs oxyde d'alkylène, en tout ou partie.
- n représente le nombre d'unités de répétition du motif -BD-BM-dudit copolymère. n est compris dans la gamme allant de 1 à 60, de préférence de 5 à 30, ou mieux de 6 à 20.

Par faible température de transition vitreuse pour un polymère entrant dans la composition d'un BM au sens de l'invention, on entend une température de transition vitreuse Tg inférieure à 15°C, de préférence inférieure à 0°C, de préférence inférieure à -15°C, de préférence encore inférieure à -30°C. A titre d'exemple, ledit bloc mou peut être à base de PEG de masse molaire en nombre égale à 1500g/mol et de Tg de l'ordre de - 35°C. Ladite température de transition vitreuse Tg peut également être inférieure à -50°C, notamment dans le cas où ledit bloc mou est à base de PTMG.

Les copolyéther bloc amides, encore appelés copolymères à blocs polyéther et blocs polyamide, soit en abrégé « PEBA », résultent de la polycondensation de blocs polyamides à extrémités réactives avec des blocs polyéthers à extrémités réactives, telles que, entre autres :

1) blocs polyamides à bouts de chaîne diamines avec des blocs polyoxyalkylènes à bouts de chaînes

dicarboxyliques ;

2) blocs polyamides à bouts de chaînes dicarboxyliques avec des blocs polyoxyalkylènes à bouts de chaînes diamines, obtenues par cyanoéthylation et hydrogénation de blocs polyoxyalkylène alpha-oméga dihydroxylées aliphatiques appelées polyétherdiols ;

3) blocs polyamides à bouts de chaînes dicarboxyliques avec des polyétherdiols, les produits obtenus étant, dans ce cas particulier, des polyétheresteramides.

Les blocs polyamides à bouts de chaînes dicarboxyliques proviennent, par exemple, de la condensation de précurseurs de polyamides en présence d'un diacide carboxylique limiteur de chaîne. Les blocs polyamides à bouts de chaînes diamines proviennent par exemple de la condensation de précurseurs de polyamides en présence d'une diamine limiteur de chaîne.

La masse molaire en nombre Mn des blocs polyamides est comprise entre 400 et 20000 g/mol et de préférence entre 500 et 10000 g/mol.

Les polymères à blocs polyamides et blocs polyéthers peuvent aussi comprendre des motifs répartis de façon aléatoire.

On peut utiliser avantageusement trois types de blocs polyamides.

Selon un premier type, les blocs polyamides proviennent de la condensation d'un diacide carboxylique, en particulier ceux ayant de 4 à 20 atomes de carbone, de préférence ceux ayant de 6 à 18 atomes de carbone et d'une diamine aliphatique ou aromatique, en particulier celles ayant de 2 à 20 atomes de carbone, de préférence celles ayant de 6 à 14 atomes de carbone.

A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et para-amino-di-cyclo-hexyl-méthane (PACM), et l'isophoronediamine (IPDA), la 2,6-bis-(aminométhyl)-norbornane (BAMN) et la pipérazine (Pip).

Concernant le bloc rigide polyamide, la norme NF EN ISO 1874-1 : 2011 définit une nomenclature des polyamides. Le terme « monomère » dans la présente description doit être pris au sens d' « unité répétitive ». Le cas où une unité répétitive du polyamide est constituée de l'association d'un diacide avec une diamine est particulier. On considère que c'est l'association d'une diamine et d'un diacide, c'est-à-dire le couple « diaminediacide », dit aussi « XY », en quantité équimolaire qui correspond au monomère. Ceci s'explique par le fait qu'individuellement, le diacide ou la diamine n'est qu'une unité structurale, qui ne suffit pas à elle seule à polymériser.

On a par exemple des blocs PA412, PA414, PA418, PA610, PA612, PA614, PA618, PA912, PA1010, PA1012, PA1014 et PA1018.

Selon un deuxième type, les blocs polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone ou d'une diamine. A titre d'exemples de lactames, on peut citer le caprolactame, l'oenantholactame et le lauryllactame. A titre d'exemples d'acide alpha oméga amino carboxylique, on peut citer les acides aminocaproïque, amino-7-heptanoïque, amino-11- undécanoïque et amino-12-dodécanoïque.

Avantageusement les blocs polyamides du deuxième type sont en polyamide 11, en polyamide 12 ou en polyamide 6.

Selon un troisième type, les blocs polyamides résultent de la condensation d'au moins un acide alpha oméga aminocarboxylique (ou un lactame), au moins une diamine et au moins un diacide carboxylique.

Dans ce cas, on prépare les blocs polyamide PA par polycondensation :

- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y) ;
- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques.

Avantageusement, on utilise comme limiteur de chaîne le diacide carboxylique ayant Y atomes de carbone,

que l'on introduit en excès par rapport à la stoechiométrie de la ou des diamines.

Selon une variante de ce troisième type les blocs polyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne. A titre d'exemple d'acide alpha oméga amino carboxylique aliphatique, on peut citer les acides aminocaproïques, amino-7-heptanoïque, amino-11-undécanoïque et amino-12-dodécanoïque. A titre d'exemple de lactame, on peut citer le caprolactame, l'oenantholactame et le lauryllactame. A titre d'exemple de diamines aliphatiques, on peut citer l'hexaméthylènediamine, la dodécaméthylènediamine et la triméthylhexaméthylène diamine. A titre d'exemple de diacides cycloaliphatiques, on peut citer l'acide 1,4-cyclohexyldicarboxylique. A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque Pripol® par la société Unichema, ou sous la marque Empol® par la société Henkel) et les polyoxyalkylènes - $\alpha,\omega$ diacides. A titre d'exemple de diacides aromatiques, on peut citer les acides téréphtalique (T) et isophtalique (I). A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

Dans le cas où les blocs PA du PEBA selon l'invention comprennent au moins deux monomères différents, appelés «co-monomères», c'est à dire au moins un monomère et au moins un co-monomère (monomère différent du premier monomère), ils comprennent un copolymère tel qu'un copolyamide abrégé CoPA.

A titre d'exemples de blocs polyamides du troisième type, on peut citer les suivantes :

- 66/6 dans laquelle 66 désigne des motifs hexaméthylènediamine condensée avec l'acide adipique. 6 désigne des motifs résultant de la condensation du caprolactame.
- 66/610/11/12 dans laquelle 66 désigne l'hexaméthylènediamine condensée avec l'acide adipique. 610 désigne l'hexaméthylènediamine condensée avec l'acide sébacique. 11 désigne des motifs résultant de la condensation de l'acide aminoundécanoïque. 12 désigne des motifs résultant de la condensation du lauryllactame.

La masse Mn des blocs souples est comprise entre 100 et 6 000 g/mol et de préférence entre 200 et 3 000 g/mol.

De préférence, le polymère comprend de 1 à 80 % en masse de blocs souples et de 20 à 99 % en masse de blocs polyamide, de préférence de 4 à 80 % en masse de blocs souples et 20 à 96 % en masse de blocs polyamide. Selon un mode de réalisation préféré, le bloc rigide polyamide, dans le copolymère à blocs rigides PA et blocs souples selon l'invention, comprend au moins un des motifs de polyamide suivants : 11, 12, 6, 610, 612, 1010, 1012, et leurs mélanges ou copolyamides.

Les blocs polyéthers PE sont constitués de motifs oxyde d'alkylène. Ces motifs peuvent être par exemple des motifs oxyde d'éthylène, des motifs oxyde de propylène ou tétrahydrofurane (qui conduit aux enchaînements polytétraméthylène glycol). On utilise ainsi des blocs PEG (polyethylène glycol) c'est à dire ceux constitués de motifs oxyde d'éthylène, des blocs PPG (propylène glycol) c'est à dire ceux constitués de motifs oxyde de propylène, des blocs PO3G (polytriméthylène glycol) c'est-à-dire ceux constitués de motifs polytriméthylène ether de glycol (de tels copolymères avec des blocs polytriméthylene ether sont décrits dans le document US6590065), et des blocs PTMG c'est à dire ceux constitués de motifs tetraméthylène glycols appelés aussi polytétrahydrofurane. Les copolymères PEBA peuvent comprendre dans leur chaîne plusieurs types de polyéthers, les copolyéthers pouvant être à blocs ou statistiques.

On peut également utiliser des blocs obtenus par oxyéthylation de bisphenols, tels que par exemple le bisphenol A. Ces derniers produits sont décrits dans le brevet EP613919.

Les blocs polyéthers peuvent aussi être constitués d'amines primaires éthoxylées. A titre d'exemple d'amines primaires éthoxylées on peut citer les produits de formule :

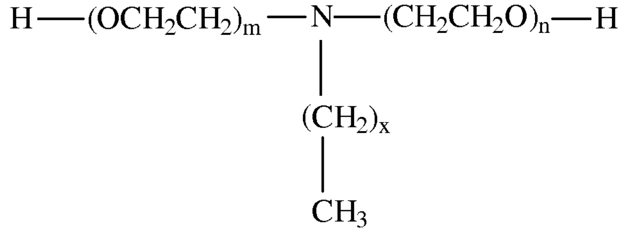

dans laquelle m et n sont compris entre 1 et 20 et x entre 8 et 18. Ces produits sont disponibles dans le commerce sous

la marque Noramox® de la société CECA et sous la marque Genamin® de la société Clariant.

Les blocs souples polyéthers peuvent comprendre des blocs polyoxyalkylène à bouts de chaînes $NH_2$, de tel blocs pouvant être obtenues par cyanoacétylation de blocs polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 542, produits commerciaux de la société Huntsman, également décrites dans les documents de brevets JP2004346274, JP2004352794 et EP1482011).

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. La méthode générale de préparation en deux étapes des copolymères PEBA ayant des liaisons ester entre les blocs PA et les blocs PE est connue et est décrite, par exemple, dans le brevet français FR2846332. La méthode générale de préparation des copolymères PEBA de l'invention ayant des liaisons amide entre les blocs PA et les blocs PE est connue et décrite, par exemple dans le brevet européen EP1482011. Les blocs polyéther peuvent être aussi mélangés avec des précurseurs de polyamide et un limiteur de chaîne diacide pour faire les polymères à blocs polyamides et blocs polyéthers ayant des motifs répartis de façon statistique (procédé en une étape).

Bien entendu, la désignation PEBA dans la présente description de l'invention se rapporte aussi bien aux Pebax® commercialisés par Arkema, aux Vestamid® commercialisés par Evonik®, aux Grilamid®, commercialisés par EMS, qu'aux Kellaflex® commercialisés par DSM ou à tout autre PEBA d'autres fournisseurs.

Avantageusement, les copolymères PEBA ont des blocs PA en PA 6, en PA 11, en PA 12, PA 612, en PA 66/6, en PA 1010 et/ou en PA 614, de préférence des blocs PA 11 et/ou PA 12 ; et des blocs PE en PTMG, en PPG et/ou en PO3G. Les PEBA à base de blocs PE constitués majoritairement de PEG sont à ranger dans la gamme des PEBA hydrophiles. Les PEBA à base de blocs PE constitués majoritairement de PTMG sont à ranger dans la gamme des PEBA hydrophobes.

Avantageusement, ledit PEBA utilisé dans la composition selon l'invention est obtenu au moins partiellement à partir de matières premières bio-ressourcées.

Par matières premières d'origine renouvelable ou matières premières bio-ressourcées, on entend des matériaux qui comprennent du carbone bio-ressourcé ou carbone d'origine renouvelable. En effet, à la différence des matériaux issus de matières fossiles, les matériaux composés de matières premières renouvelables contiennent du $^{14}C$. La « teneur en carbone d'origine renouvelable » ou « teneur en carbone bio-ressourcé » est déterminée en application des normes ASTM D 6866 (ASTM D 6866-06) et ASTM D 7026 (ASTM D 7026-04). A titre d'exemple, les PEBA à base de polyamide 11 proviennent au moins en partie de matières premières bio-ressourcées et présentent une teneur en carbone bio-ressourcé d'au moins 1%, ce qui correspond à un ratio isotopique de $^{12}C/^{14}C$ d'au moins 1,2 x $10^{-14}$. De préférence, les PEBA selon l'invention comprennent au moins 50% en masse de carbone bio-ressourcé sur la masse totale de carbone, ce qui correspond à un ratio isotopique $^{12}C/^{14}C$ d'au moins 0,6.$10^{-12}$. Cette teneur est avantageusement plus élevée, notamment jusqu'à 100%, qui correspond à un ratio isotopique $^{12}C/^{14}C$ de 1,2 x $10^{-12}$, dans le cas par exemple de PEBA à blocs PA 11 et blocs PE comprenant du PO3G, PTMG et/ou PPG issus de matières premières d'origine renouvelable.

<u>Les blocs polyesters PES</u> sont habituellement fabriqués par polycondensation entre un acide dicarboxylique et un diol. Les acides carboxyliques appropriés comprennent ceux mentionnés ci-dessus utilisés pour former les blocs polyamide à l'exception des acides téréphthaliques et isophthaliques. Les diols appropriés comprennent les diols aliphatiques linéaires tel que l'éthylène glycol, le 1,3-propylène glycol, le 1,4-butylène glycol, le 1,6-hexylène glycol, les diols branchés tel que le néopentylglycol, le 3-méthylpentane glycol, le 1,2-propylène glycol, et les diols cycliques tel que le 1,4-bis(hydroxyméthyl)cyclohexane et le 1,4-cyclohexane-diméthanol.

On entend également par polyesters, le poly(caprolactone) et les PES à base de dimères d'acide gras, en particulier les produits de la gamme PRIPLAST® de la société Croda ou Uniqema.

On peut également envisager un bloc PES de type «copolyester» alterné, statistique ou à blocs, contenant un enchaînement d'au moins deux types de PES cités ci-dessus.

<u>Par bloc polysiloxane</u> (ci-après abrégé PSi) au sens de l'invention, on entend tout polymère ou oligomère organisilicié à structure linéaire ou cyclique, ramifiée ou réticulée obtenu par polymérisation de silanes fonctionnalisés et constitué pour l'essentiel par une répétition de motifs principaux dans lesquels des atomes de silicium sont reliés entre eux par des atomes d'oxygène (liaison siloxane Si-O-Si), des radicaux hydrocarbonés éventuellement substitués étant directement liés par l'intermédiaire d'un atome de carbone sur lesdits atomes de silicium. Les radicaux hydrocarbonés les plus courants sont les radicaux alkyls notamment en C1-C10 et en particulier méthyle, les radicaux fluoroalkyls, les radicaux aryls et en particulier phényle, et les radicaux alcényls et en particulier vinyle ; d'autres types de radicaux susceptibles d'être lies soit directement, soit par l'intermédiaire d'un radical hydrocarboné, à la chaîne siloxanique sont notamment l'hydrogène, les halogènes et en particulier le chlore, le brome ou le fluor, les thiols, les radicaux alcoxy, les radicaux polyoxyalkylènes (ou polyéthers) et en particulier polyoxyéthylène et/ou polyoxypropylène, les radicaux hydroxyls ou hydroxyalkyls, les groupements amines substitués ou non, les groupements amides, les radicaux acyloxy ou acyloxyalkyls, les radicaux hydroxyalkylamino ou aminoalkyls, des groupements ammonium quaternaires, des groupements amphotères ou betaïniques, des groupements anioniques tels que carboxylates, thioglycolates, sulfosuccinates, thiosulfates, phosphates et sulfates, et leurs mélanges, cette liste n'étant bien entendu nullement limitative (silicones dites "organomodifiees").

De préférence, lesdits blocs polysiloxane comprennent du polydiméthylsiloxane (ci-après abrégé blocs PDMS), du polyméthylphénylsiloxane, et/ou du polyvinylsiloxane.

Par bloc polyoléfine (ci-après abrégé bloc PO) au sens de l'invention, on entend tout polymère comprenant comme monomère une alpha-oléfine, c'est-à-dire les homopolymères d'une oléfine ou les copolymères d'au moins une alpha-oléfine et d'au moins un autre monomère copolymérisable, l'alpha-oléfine ayant avantageusement de 2 à 30 atomes de carbone.

A titre d'exemple d'alpha-oléfine, on peut citer l'éthylène, le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou plus de deux.

A titre d'exemples, on peut citer :

- les homopolymères et copolymères de l'éthylène, en particulier le polyéthylène basse densité (LDPE), le polyéthylène haute densité (HDPE), le polyéthylène linéaire basse densité (LLDPE), le polyéthylène très basse densité (VLDPE), le polyéthylène obtenu par catalyse métallocène ;
- les homopolymères et copolymères du propylène,
- les polyalphaoléfines essentiellement amorphes ou attactiques (APAO),
- les copolymères éthylène/alpha-oléfine tels qu'éthylène/propylène, les élastomères EPR (éthylène-propylène-rubber), et EPDM (éthylène- propylène-diène), et les mélanges de polyéthylène avec un EPR ou un EPDM,
- les copolymères blocs styrène/éthylène-butène/styrène (SEBS), styrène/ butadiène/styrène (SBS), styrène/isoprène/styrène (SIS), et styrène/éthylène-propylène/styrène (SEPS),
- les copolymères de l'éthylène avec au moins un produit choisi parmi les sels ou les esters d'acides carboxyliques insaturés tels que par exemple les (méth)acrylates d'alkyle, l'alkyle pouvant avoir jusqu'à 24 atomes de carbone, les esters vinyliques d'acides carboxyliques saturés tels que par exemple l'acétate ou le propionate de vinyle, et les diènes tels que par exemple le 1,4-hexadiène ou le polybutadiène.

Selon un mode de réalisation avantageux de l'invention ledit au moins un bloc polyoléfine comprend du polyisobutylène et/ou du polybutadiène.

Selon un mode de réalisation particulièrement avantageux, le copolymère à blocs selon l'invention comporte au moins un bloc souple polyoléfine (bloc PO) et au moins un bloc dur hydrophile (ci après abrégé BDh) comprenant à la fois du polyamide et du polyéther, tel qu'un bloc polyétheramide, un bloc polyétheresteramide, et/ou un bloc polyétheramideimide, etc... Ledit bloc PO comprend de préférence une polyoléfine comportant des groupements terminaux acides, alcools ou amines. De préférence, le bloc PO est obtenu par dégradation thermique de polyoléfines de haut poids moléculaire pour former des polyoléfines de plus faible masse et fonctionnalisées (méthode de référence : Japanese Kokai Publication Hei-03-62804). En ce qui concerne le bloc BDh, il peut comprendre en outre au moins un polymère choisi parmi: des polymères cationiques, de type amine quaternaire et/ou dérivés phosphorés ; et/ou des polymères anioniques, de type diacide modifié, comportant un groupement sulfonate et susceptible de réagir avec un polyol. L'ajout de sel organique est alors envisageable dans la préparation du bloc BDh ou lors de la réaction entre le bloc PO et le bloc BDh. Le document US6552131 décrit la synthèse et les différentes structures possibles pour le copolymère à blocs PO et à blocs BDh, celles-ci étant bien entendu envisageables dans le procédé selon l'invention.

Par bloc polycarbonate (ci-après abrégé bloc PC) au sens de l'invention, on entend plus particulièrement tout polycarbonate aliphatique. Les polycarbonates aliphatiques sont décrits par exemple dans les documents DE2546534 et JP1009225. De tels polycarbonates homopolymères ou copolymères sont également décrits dans le doument US471203. Les demandes WO92/22600 et WO95/12629 décrivent des copolymères comprenant des blocs polycarbonate ainsi que leurs procédés de synthèse. Les blocs (et leur synthèse) décrits dans ces documents sont parfaitement envisageables pour la synthèse d'un copolymère à blocs PC selon l'invention. De préférence, les blocs polycarbonate du copolymère selon l'invention ont pour formule :

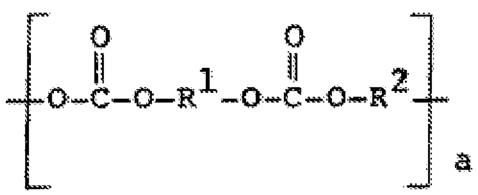

dans laquelle a est un nombre entier de 2 à 300; R1 et R2, qui peuvent être identiques ou différents, représentent une chaîne droite ou ramifiée, aliphatique ou alicyclique possédant de 2 à 18 atomes de carbone, ou bien représentent un groupement polyoxyalkylène ou encore représentent un groupement polyester.

Les polycarbonates dans lesquels R1 et R2 sont choisis parmi les groupements hexylène, décylène, dodécylène, 1,4-cyclohéxylene, 2,2-diméthyl1,3-propylène, 2,5-diméthyl-2,5-hexylène ou polyoxyéthylèene sont préférés.

Si les copolymères à blocs décrits ci-dessus comprennent généralement au moins un bloc rigide polyamide et au moins un bloc souple, il est évident que la présente invention couvre en fait tous les copolymères comprenant deux, trois, quatre (voire plus) blocs différents choisis parmi ceux décrits dans la présente description, dès l'instant qu'au moins un de ces blocs est un bloc polyamide.

Avantageusement, le copolymère selon l'invention comprend un copolymère segmenté à blocs comprenant trois types de blocs différents (nommé «tribloc» dans la présente description de l'invention), qui résultent de la condensation de plusieurs des blocs décrits ci-dessus. Ledit tribloc est de préférence choisi parmi les copolyétheresteramides, les copolyétheramideuréthanes, dans le(s)quel(s) :

- le pourcentage massique en bloc rigide polyamide est supérieure à 10% ;
- le pourcentage massique en blocs souples est supérieur à 20% ;

sur la masse totale de tribloc.

Selon un mode de réalisation préféré, le bloc souple dans le film à base de copolymère à blocs rigides PA et blocs souples selon l'invention, comprend (et de préférence est) un bloc polyéther PE, choisi de préférence parmi PTMG, PPG, PO3G et/ou PEG.

Selon un autre mode de réalisation avantageux, le bloc souple dans le copolymère à blocs rigides PA et blocs souples du film selon l'invention, comprend (et de préférence est) un bloc polyester PES, choisi parmi les polyesters diols, le poly(caprolactone) et les polyesters à base de dimères d'acide gras.

Avantageusement, dans le copolymère selon l'invention, le ratio en poids des blocs PA sur les blocs souples est compris dans la gamme de 0,3 à 10, de préférence de 0,3 à 6, de préférence de 0,3 à 3, de préférence de 0,3 à 2. De préférence, ledit copolymère à la base du film selon l'invention comprend de 45 à 75% en poids de blocs souples polyéthylène glycol (PEG), de préférence de 50 à 70% en poids de blocs PEG, sur le poids total de copolymère.

De préférence, ledit bloc polyamide PA du copolymère utilisé dans le film de l'invention comprend au moins un des motifs de polyamide suivants : 6, 66, 610, 612, PA1010, PA1012, PA11, PA12, PA6/12, PA6/66, et leurs mélanges ou copolyamides.

Avantageusement, le copolymère comprend un copolymère à blocs rigides polyamide et blocs souples polyéther (PEBA), de préférence choisi parmi les PEBAs suivants : PA6-PEG, PA1010-PEG, PA1012-PEG, PA11-PEG, PA12-PEG, PA6/12-PEG, PA66-PEG, PA6/66-PEG, et leurs mélanges.

Des polycarbodiimides appropriés pour la présente invention sont représentés par la formule générale suivante:

$$R\text{-}[\text{-}N{=}C{=}N\text{-}R']_n\text{-}$$

où R est monovalent, R' est divalent, n vaut de 2 à 50, de préférence de 2 à 45, de préférence de 2 à 20, et de préférence de 5 à 20.

R peut être, par exemple, un groupe alkyle en C1-C20 ou cycloalkyle en C3-C10 ou alcényle en C1-C20, et peut être cyclique ou ramifié, ou peut contenir un noyau aromatique en C8-C16, et peut être substitué par des groupes fonctionnels.

R' peut être un groupe divalent correspondant à tout ce qui précède, par exemple un alkylène en C1-C20, un cycloalkylène en C3-C10, etc. Des exemples de groupes fonctionnels comprennent, mais sans y être limités, cyanato et isocyanato, halo, amido, carboxamido, amino, imido, imino, silyle, etc. Ces listes sont destinées uniquement à des fins d'illustration et non à titre limitatif de la portée de la présente invention.

A titre d'exemples de polycarbodiimides utilisables selon la présente invention, on peut citer des motifs répétés de N,N'-dicyclohexylcarbodiimide, N,N'-diisopropylcarbodiimide, N,N'-diphénylcarbodiimide, N,N'-di-2,6-diisopropylphénylcarbodiimide, 4,4'-dicyclohexylméthanecarbodiimide, tétraméthylxylylènecarbodiirnide (carbodiimide aromatique), N,N-diméthylphénylcarbodiimide, N,N'-di-2,6-diisopropylphénylcarbodiimide, 2,2',6,6'-tétraisopropyl diphényl carbodiimide (carbodiimide aromatique), homopolymère aromatique de 1,3,5-triisopropyl-2,4-diisocyanatobenzène, hétéropolymère aromatique de 1,3,5-triisopropyl-2,4-diisocyanatobenzène et 2,6-diisopropylphénylisocyanate, ou des combinaisons de ceux-ci.

Des exemples spécifiques de R' comprennent, mais sans y être limités, les radicaux divalents dérivés du 2,6-diisopropylbenzène, du naphtalène, du 3,5-diéthyltoluène, du 4,4'-méthylène-bis(2,6-diéthylènephényle), 4,4'-méthylène-bis(2-éthyle-6-méthylphényl), 4,4'-méthylène-bis (2,6-diisopropylphényl), 4,4'-méthylène-bis (2-éthyl-5-méthylcyclohexyle), 2,4,6-triisopropylphényle, n-hexane, cyclohexane, dicyclohexylméthane et le méthylcyclohexane, et analogues.

Les documents de brevet US5130360, US5859166, US368493, US7456137 US2007/0278452, US2009/0176938, et en particulier US5360888 décrivent encore d'autres exemples de polycarbodiimides.

Des polycarbodiimides appropriés peuvent être obtenus auprès de sources disponibles dans le commerce telles que la série Stabaxol P chez Rhein Chemie, la série Stabilizer chez Raschig, et d'autres chez Ziko ou encore Teijin par exemple.

Avantageusement, le polycarbodiimide est choisi parmi un Stabiliser, en particulier le Stabilizer® 9000 correspondant au Poly-(1,3,5-triisopropyl-phenylene-2,4-carbodiimide), un Stabaxol®, notamment un stabaxol® P, en particulier le Stabaxol® P100 ou le Stabaxol® P400, ou un mélange de ceux-ci.

De préférence, le polycarbodiimide est de masse moléculaire moyenne en poids supérieure à 10000 g/mol.

Avantageusement, la masse moléculaire moyenne en poids du polycarbodiimide est comprise dans la gamme de 10000 à 40000 g/mol, de préférence de 15000 à 30000 g/mol.

La teneur en poids du polycarbodiimide représente avantageusement de 0,5 à 10% en poids, de préférence de 0,5 à 7% en poids, de préférence de 0,5 à 3% en poids, de préférence de 0,5 à 2,5%, de préférence de 0,5 à 2% en poids, sur le poids total de copolymère selon l'invention.

Selon un mode de réalisation avantageux de l'invention, ledit acide carboxylique du copolymère, dans le film selon l'invention, forme une liaison urée par réaction avec un carbodiimide du polycarbodiimide.

Un des avantages du copolymère à blocs à fin de chaine acide bloquée à la base du film selon l'invention est qu'il reste sous forme linéaire non réticulée, la dispersité Mw/Mn du copolymère étant inférieure à 3. Ceci est surprenant dans la mesure où, dans l'art antérieur, les carbodiimides sont plutôt utilisés pour viscosifier les polyamides (voir par exemple le document de brevet FR3027907), notamment en les réticulant, et pour améliorant leur tenue à l'hydrolyse comme décrit dans US5360888.

La présente invention a également pour objet l'utilisation d'un polycarbodiimide dans un procédé de fabrication de film à base de copolymère à blocs polyamides et blocs souples comportant au moins une fin de chaîne acide carboxylique, pour améliorer l'extrudabilité et/ou la capacité d'étirement (ou d'étirage) du copolymère sous forme de film et/ou améliorer la vitesse d'extrusion dudit copolymère, dans laquelle au moins une fin de chaîne acide carboxylique du copolymère est bloquée par une fonction carbodiimide du polycarbodiimide.

La présente invention a encore pour objet l'utilisation d'un polycarbodiimide dans un film à base copolymère à blocs polyamides et blocs souples comportant au moins une fin de chaîne acide carboxylique, pour améliorer l'étirabilité du film, la souplesse du film, sa résistance à l'abrasion, et sa résistance à la déchirure, dans laquelle au moins une fin de chaîne acide carboxylique du copolymère est bloquée par une fonction carbodiimide du polycarbodiimide.

De préférence, pour l'utilisation selon l'invention, le polycarbodiimide est de masse moléculaire moyenne en poids supérieure à 10000 g/mol, de préférence comprise dans la gamme de 10000 à 40000 g/mol, de préférence de 15000 à 30000 g/mol.

De préférence, la masse moléculaire moyenne en poids du polycarbodiimide utilisé dans la présente invention est mesurée par chromatographie par perméation de gel (GPC) dans du tétrahydrofurane (THF). Avantageusement, au moins une fin de chaîne acide carboxylique du copolymère est bloquée par une fonction urée formée par réaction avec le polycarbodiimide.

La présente invention a aussi pour objet une composition de film à base de copolymère selon l'invention, caractérisée en ce qu'elle comprend :

- de 51% à 99,9% en poids dudit copolymère à blocs tels que défini plus haut,
- de 0,1 à 49% en poids d'au moins un autre composant choisi parmi les polyamides, les polyoléfines fonctionnelles, les copolyétheresters, les polyuréthanes thermoplastiques (TPU), copolymères d'éthylène et acétate de vinyle, les copolymères d'éthylène et d'acrylate, et les copolymères d'éthylène et d'alkyl(méth)acrylate,
  et/ou
- de 0,1 à 10% en poids d'additifs choisis parmi les agents nucléants, les charges, notamment les charges minérales, telles que le talc, les fibres de renfort, notamment de verre ou de carbone, les colorants, les absorbeurs UV, les antioxydants, notamment phénoliques, ou à base de phosphore ou à base de soufre, les stabilisants lumière de type amine encombrée ou HALS, et leurs mélanges,

sur le poids total de la composition.

Avantageusement, le film selon l'invention comprend une polyoléfine fonctionnelle comportant un greffage par un monomère choisi dans le groupe comprenant les acides carboxyliques insaturés, les anhydrides carboxyliques insaturés, les monomères vinyliques, les monomères acryliques, et leurs mélanges.

De préférence, la polyoléfine fonctionnelle est choisie dans le groupe comprenant les copolymères éthylène-ester acrylique, les copolymères éthylène-ester acrylique-anhydride maléique, les copolymères éthylène-ester acrylique-méthacrylate de glycidyle.

Avantageusement, le film selon l'invention présente une épaisseur inférieure ou égale à 100 $\mu$m, de préférence

inférieure ou égale à 50 $\mu$m, de préférence inférieure ou égale à 30 $\mu$m, de préférence inférieure ou égale à 25 $\mu$m, de préférence comprise dans la gamme de 5 à 25 $\mu$m.

La présente invention a encore pour objet un procédé de fabrication du film selon l'invention, comprenant les étapes de :

a) mise à disposition du copolymère comportant au moins une fin de chaîne acide carboxylique bloquée par un polycarbodiimide, éventuellement en mélange avec d'autres composants du film tel que défini plus haut,
b) extrusion du copolymère ou dudit mélange de l'étape a),
c) étirement du copolymère ou dudit mélange pour former un film.

Selon un mode de réalisation particulier, le procédé de l'invention comprend, préalablement à l'étape a), le mélange de copolymère à blocs comprenant au moins un bloc rigide polyamide PA et au moins un bloc souple et de polycarbodiimide, de sorte qu'au moins une fin de chaine acide carboxylique du copolymère à blocs réagit avec une fonction carbodiimide du polycarbodiimide. De préférence, ce que le mélange est réalisé au moyen d'une extrudeuse mono-vis ou bi-vis ou par ajout du polycarbodiimide lors de la synthèse du copolymère à bloc.

Avantageusement, l'étape c) d'étirement est effectuée par extrusion soufflage, extrusion-gonflage, extrusion-étirage, extrusion-gainage, extrusion-calandrage, extrusion en filière plate, extrusion-couchage, lamination, et/ou coextrusion.

De manière avantageuse, l'étape b) est effectuée à une température comprise dans la gamme de 80 à 350°C, de préférence de 100°C à 300 °C, de préférence de 150 à 250°C.

L'utilisation de copolymère bloqué par un polycarbodiimide selon l'invention permet une plus large fenêtre de processabilité notamment en terme de températures, et on observe moins d'instabilité d'extrusion qu'avec le copolymère correspondant non bloqué, ainsi que des vitesses d'extrusion maximales atteignables supérieures.

La présente invention a également pour objet un produit stratifié comprenant au moins un matériau textile et au moins un film selon l'invention, ledit film adhérant sur au moins une surface du matériau textile avec une force de pelage comprise dans la gamme de 0,5 à 50 N, de préférence de 0,5 à 10 N, mesurée selon la norme ISO 11339.

De préféence, ledit au moins un matériau textile se présente sous la forme d'une membrane poreuse, d'un textile tissé ou d'un textile non tissé.

De préférence, ledit au moins un matériau textile comprend des fibres synthétiques, notamment des fibres synthétiques obtenues à partir de matières premières bio-ressourcées, des fibres naturelles, des fibres artificielles fabriquées à partir de matières premières naturelles, des fibres minérales, et/ou des fibres métalliques.

Avantageusement, ledit au moins un matériau textile constitue un feutre, un filtre, un film, une gaze, une toile, un pansement, une couche, un tissu, un tricot, un article d'habillement, un vêtement, un article de literie, un article d'ameublement, un rideau, un revêtement d'habitacle, un textile technique fonctionnel, un géotextile, et/ou un agrotextile.

La présente invention a encore pour objet l'utilisation d'un film selon l'invention dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment.

Ledit film selon l'invention constitue avantageusement un composant d'emballage, notamment agroalimentaire, un film d'emballage alimentaire, un film d'emballage pour cuisson et/ou fumage, notamment de saucisse, un film imper-respirant, notamment utilisé dans le bâtiment, un composant textile, d'équipement sportif, de chaussure, de chaussure de sport, de semelle de chaussure, de décoration, de bagage, de lunettes, de mobilier, d'équipement audio-visuel, informatique, d'équipement automobile ou aéronautique et/ou un composant d'équipement médical.

## EXEMPLES

Les exemples suivants illustrent l'invention sans la limiter. Les normes utilisées dans les exemples correspondent également à celles utilisées plus généralement pour caractériser l'invention dans la description ou les revendications.

### Matériaux utilisés :

Dans les exemples qui suivent :

PEBA 1 : PA 12-PTMG (Mn : 600-2000)
PEBA 1 est un copolymère à blocs PA 12 et blocs PTMG de masses moléculaires moyennes en nombre (Mn) respectives 600 - 2000.
Copo 1 : 98,5% PEBA 1 + 1,5% PCDI
PEBA 2 : PA 12-PTMG (Mn : 850-2000)
PEBA 2 est un copolymère selon l'invention, à blocs PA 12 et blocs PTMG de masses moléculaires moyennes en

nombre (Mn) respectives 850 - 2000.
Copo 2 : 98% PEBA 2 + 2% PCDI
PEBA 3 : PA 12-PTMG (Mn : 2000-1000)
PEBA 3 est un copolymère selon l'invention, à blocs PA 12 et blocs PTMG de masses moléculaires moyennes en nombre (Mn) respectives 2000 - 1000.
Copo 3 : 98,5% PEBA 3 + 1,5% PCDI
PEBA 4 : PA11-PTMG (600-1000)
PEBA 4 est un copolymère à blocs PA11 et blocs PTMG de masses moléculaires moyennes en nombre (Mn) respectives 600 - 1000.
Copo 4 : 98% PEBA 4 + 2% PCDI
PCDI : Polycarbodiimide utilisé dans les exemples : Poly-(1,3,5-triisopropyl-phenylene-2,4-carbodiimide)

Des films imper respirants ont été préparés à partir des matériaux ci-dessus. L'imper-respirabilité (ou MVTR) des différents films des matériaux précités (PEBAs et Copos) est mesurée. Pour tous les cas, le MVTR du film PEBA et celui du film Copo correspondant sont sensiblement identiques : l'imper-respirabilité (MVTR) est mesurée supérieure à 100 g/m2 par 24 heures à 23°C pour un taux d'humidité relative de 50% et une épaisseur d'échantillon de 30 μm, mesurée selon la norme ASTM E96B.
L'adhérence des films est directement liée aux valeurs de forces de pelage. Les essais de pelage sont faits de préférence dans un délai compris entre 2 heures et 48 heures après la fabrication d'un stratifié comprenant un film de PEBA ou Copo de 25 μm adhésif, par extrusion couchage, sur un textile non tissé de polypropylène. On a effectué sur les stratifiés de chacun des essais un essai de pelage (selon la norme ISO11339), sur une bande de 15 mm de stratifiée amorcée puis tirée à une vitesse 200 de mm/minute.
Pour tous les stratifiés, la force de pelage du film PEBA et du film Copo correspondant reste sensiblement la même, elle est mesurée supérieure à 0,5 N dans chaque cas.

Exemple 1 : Mesure de l'extrudabilité des matériaux PEBAs et Copos

Le tableau 1 suivant donne les résultats de mesure de viscosité à l'état fondu eta* (en Pa.s) à 220°C, en fonction de la fréquence angulaire (rad/s) selon la norme ISO 6721-10:2015.

*Tableau 1*

| Fréquence angulaire | eta* - PEBA 1 | Eta* - Copo 1 | eta* - PEBA 3 | eta* - Copo 3 | eta* - PEBA 4 | eta* - Copo 4 |
|---|---|---|---|---|---|---|
| [1/s] | [Pa·s] | [Pa·s] | [Pa·s] | [Pa·s] | [Pa·s] | [Pa·s] |
| 628 | 206 | 363 | 312 | 404 | 182 | 361 |
| 292 | 258 | 508 | 415 | 575 | 237 | 518 |
| 135 | 302 | 659 | 516 | 767 | 288 | 705 |
| 62,8 | 334 | 802 | 606 | 967 | 337 | 943 |
| 29,2 | 353 | 923 | 676 | 1160 | 382 | 1190 |
| 13,5 | 363 | 1010 | 726 | 1340 | 418 | 1490 |
| 6,28 | 368 | 1080 | 761 | 1510 | 444 | 1820 |
| 2,92 | 372 | 1120 | 785 | 1660 | 461 | 2170 |
| 1,35 | 375 | 1150 | 805 | 1810 | 470 | 2520 |
| 0,628 | 379 | 1170 | 825 | 1980 | 476 | 2830 |
| 0,292 | 381 | 1170 | 849 | 2260 | 472 | 3080 |
| 0,135 | 396 | 1190 | 930 | 2910 | 477 | 3380 |
| 0,0628 | 442 | 1210 | 1190 | 4200 | 498 | 3750 |

On observe que les matériaux Copos selon l'invention présentent une plus grande viscosité à l'état fondu que les PEBAs comparatifs.
Les matériaux Copos selon l'invention sont donc plus facilement extrudables en films que les matériaux PEBAs

comparatifs.

Exemple 2 : Mesure de l'aptitude à l'étirement des PEBAs et Copos au moyen d'un Rhéotens

Description du test de rhéologie élongationnelle :

Principe : Un jonc est extrudé à travers une filière d'un rhéomètre capillaire; celui-ci est saisi, à l'état fondu, par 2 paires de roues entraînées par un moteur à vitesse variable. Une première paire de roues ainsi que le moteur sont montés à l'extrémité libre, déviable, d'un support relié directement à un capteur, représentant la force de rappel.

La 2ème paire de roues (couplée aux premières) permet de guider et de limiter l'enroulement du jonc autour des roues supérieures. Des petits tampons imbibés de liquide tensioactif (mélange eau, ethanol, et tensioactif) sont également appliqués sur les roues afin de les refroidir et ainsi limiter l'effet de collage.

Les courbes de melt strenght des figures 1 et 2 représentent la contrainte d'élongation en ordonnée en fonction du facteur d'élongation en abscisse.

Contrainte d'élongation :

$$\sigma_z = \frac{F.V}{A_0.V_0}$$

Facteur d'élongation :

$$V = \frac{V}{V_0}$$

Avec

$v$ : Vitesse avec laquelle le jonc est étiré : vitesse des roues
$F$ : Force appliquée par le jonc
$A_0$ : Aire du jonc lorsqu'il sort de la filière
$v_0$ : Vitesse d'extrusion du jonc en sortie de filière

Conditions opératoires :

- Rhéomètre capillaire :

  Appareil : RHEOMETRE CAPILLAIRE GOTTFERT RHEOTESTER 2000.
  Filière : 30 mm X 1 mm Filières L/d = 30/1
  Capteur : 0-1400 bar (référence 131055)
  Temps de préchauffage : 300 s (5 min)
  Températures d'essai : 150°C ou 180°C selon les grades
  Gradient de cisaillement : 50 $s^{-1}$

- Rhéotens :

  Roues : Inox rainurées
  Hauteur de tirage : 105 mm
  Entrefer : environ ≈ 0,6 mm
  Vo (vitesse initile) ≈ 6 mm/s
  Accélérations : a * t, a = 2,4 $mm/s^2$
  Lubrification : mélange eau + tensioactif
  Diamètre du piston : 12 mm
  Vitesse du piston : 0,043 mm/s

La figure 1 représente le résultat de mesure de rhéologie élongationnelle du PEBA 3 (courbe du bas) et du Copo 3 (courbe du haut) à 180°C.

La figure 2 représente le résultat de mesure de rhéologie élongationnelle du PEBA 4 (courbe du bas) et du Copo 4 (courbe du haut) à 150°C.

Les copolymères Copo 3 et Copo 4 utilisés dans les films selon l'invention présentent une aptitude à l'étirement améliorée par rapport à celle des témoins respectifs PEBA 3 et PEBA 4.

Les films selon l'invention à base de copolymères à blocs comportant au moins une fin de chaîne acide carboxylique bloquée par un polycarbodiimide présentent une étirabilité améliorée par rapport aux films à base des mêmes copolymères respectifs non bloqués.

Exemple 3 - Comparaison des modules en traction et en flexion de différents PEBAs et COPOs

Les résultats de ces essais sont donnés dans le tableau 2 suivant.

*Tableau 2*

| Normes | ESSAIS | Unités | **PEBA 1** | **Copo 1** | **PEBA 2** | **Copo 2** | **PEBA 3** | **Copo 3** | **PEBA 4** | **Copo 4** |
|---|---|---|---|---|---|---|---|---|---|---|
| ISO 527 1A:2012 | Module en traction à 23°C | MPa | 12 | 11 | 20 | 18 | 209 | 193 | 45 | 39 |
| ISO 178: 2010 | Module en flexion à 23°C | MPa | 15 | 11 | | | 184 | 177 | | |

Les copolymères Copo 1 à 4 utilisés dans les matériaux textiles selon l'invention présentent des modules en traction et en flexion inférieurs par rapport à ceux des témoins respectifs PEBA 1 à 4.

Les films selon l'invention à base de copolymères à blocs comportant au moins une fin de chaîne acide carboxylique bloquée par un polycarbodiimide présentent une souplesse améliorée par rapport aux films à base des mêmes copolymères respectifs non bloqués.

Exemple 4 - Comparaison des résistances à l'abrasion et à la déchirure de différents PEBAs et COPOs

Les résultats de ces essais sont donnés dans le tableau 3 suivant.

*Tableau 3*

| **Normes** | **ESSAIS** | **Unités** | **PEBA 1** | **Copo 1** | **PEBA 2** | **Copo 2** | **PEBA 3** | **Copo 3** | **PEBA 4** | **Copo 4** |
|---|---|---|---|---|---|---|---|---|---|---|
| **ISO 9352: 2012** | **Résistance à l'abrasion Perte de masse** *ET* | **mg** | *n= 4* **36,7** *7,3* | *n= 4* **26,3** *6,0* | *n= 4* **41,9** *4,4* | *n= 4* **33,9** *3,3* | *n= 4* **17,0** *3,9* | *n= 4* **13,1** *2,4* | *n= 4* **55,4** *2,8* | *n= 4* **41,9** *2,9* |
| **ISO 34-1: 2015** | **Résistance à la déchirure** **Médiane SI** *min* *max* **Médiane SO** *min* *max* | **kN/m** **kN/m** | *n= 5* **41** *37* *45* **29** *27* *35* | *n= 5* **48** *45* *49* **33** *31* *35* | | | | | | |

La perte de masse est inférieure dans le cas de copolymères selon l'invention, donc les films à base des copolymères selon l'invention présentent une meilleure résistance à l'abrasion que les films à base des PEBAs témoins respectifs.

De même, les films à base des copolymères selon l'invention présentent une meilleure résistance à la déchirure que les films à base des PEBAs témoins respectifs.

Exemple 5 - Mesure de la dispersité des différents PEBAs et Copos

Les masses moléculaires moyennes en poids et en nombre Mw et Mn mesurées augmentent respectivement lorsqu'on passe d'un PEBA au Copo correspondant utilisé dans les films selon l'invention, ce qui indique que la réaction s'est produite entre la fonction carbodiimide du polycarbodiimide et la fonction acide du PEBA pour former le Copo à fin de chaine acide bloquée utilisé selon l'invention.

La dispersité est déterminé comme étant égale au rapport entre masse moléculaire en poids et en nombre Mw/Mn. La précision de la mesure est donnée à 5% près.

La masse moléculaire (ou molaire) moyenne en nombre est fixée par la teneur en limiteur de chaine. Elle peut être calculée selon la relation :

$$Mn = (n_{monomère} / n_{limiteur}) * M_{motif\ de\ répétition} + M_{limiteur}$$

$n_{monomère}$ = nombre de moles de monomère
$n_{limiteur}$ = nombre de moles de diacide en excès
$M_{motif\ de\ répétition}$ = Masse molaire du motif de répétition
$M_{limiteur}$ = Masse molaire du diacide en excès

La dispersité Mw/Mn est par ailleurs conservée dans chaque Copo selon l'invention par rapport au PEBA initial correspondant, et elle est mesurée inférieure à 3, dans tous les copolymères, ce qui prouve que les copolymères selon l'invention sont restés sous forme linéaire non réticulée. Les films à base de ces copolymères restent donc parfaitement recyclables.

En définitive, le polycarbodiimide ainsi utilisé dans le film selon la présente invention permet d'améliorer les propriétés d'extrudabilité, d'étirabilité, de souplesse, de résistance à l'abrasion, et de résistance à la déchirure du film, tout en maintenant son imper-respirabilité, son adhérence et sa recyclabilité. Ces propriétés avantageuses n'ont pas pu être observées avec des carbodiimides monomériques, leur volatilité n'ayant pas permis à ces derniers de réagir ni de bloquer effectivement ledit acide carboxylique du copolymère à blocs utilisé dans le film de la présente invention.

## Revendications

1. Film souple, étirable et imper-respirant à base de copolymère à blocs comprenant au moins un bloc rigide polyamide PA et au moins un bloc souple choisi parmi : polyéther, polyester, polydiméthylsiloxane, polyoléfine, polycarbonate, et leurs mélanges ou copolymères, **caractérisé en ce que** ledit copolymère comporte au moins une fin de chaîne acide carboxylique bloquée par un polycarbodiimide, la souplesse et l'étirabilité étant évalués selon la description.

2. Film selon la revendication 1, dans lequel la masse moléculaire moyenne en poids du polycarbodiimide est supérieure à 10000 g/mol, de préférence comprise dans la gamme de 10000 à 40000 g/mol, de préférence de 15000 à 30000 g/mol, la masse moléculaire moyenne en poids étant mesurée par GPC dans le tétrahydrofurane et/ou la teneur en poids du polycarbodiimide représente de 0,5 à 10% en poids, de préférence de 0,5 à 7% en poids, de préférence de 0,5 à 3% en poids, de préférence de 0,5 à 2,5%, de préférence de 0,5 à 2% en poids, sur le poids total de copolymère.

3. Film selon la revendication 1 ou 2, **caractérisé en ce que** ledit copolymère est sous forme linéaire non réticulée, sa dispersité Mw/Mn étant inférieure à 3, la dispersité étant déterminée selon la description.

4. Film selon l'une quelconque des revendications 1 à 3, dans lequel ledit polyéther est choisi parmi : PTMG, PPG, PO3G et/ou PEG ; et/ou ledit polyester est choisi parmi : les polyesters diols, le poly(caprolactone) et les polyesters à base de dimères d'acide gras.

5. Film selon l'une quelconque des revendications précédentes, dans lequel ledit au moins un copolymère comprend de 45 à 75% en poids de blocs souples polyéthylène glycol (PEG), de préférence de 50 à 70% en poids de blocs PEG, sur le poids total de copolymère.

6. Film selon l'une quelconque des revendications précédentes, dans lequel ledit bloc polyamide PA comprend au moins un des motifs de polyamide suivants : 6, 66, 610, 612, PA1010, PA1012, PA11, PA12, PA6/12, PA6/66, et leurs mélanges ou copolyamides.

7. Film selon l'une quelconque des revendications précédentes, dans lequel ledit au moins un copolymère comprend un copolymère à blocs rigides polyamide et blocs souples polyéther (PEBA), de préférence choisi parmi les PEBAs suivants : PA6-PEG, PA1010-PEG, PA1012-PEG, PA11-PEG, PA12-PEG, PA6/12-PEG, PA66-PEG, PA6/66-PEG, et leurs mélanges.

8. Film selon l'une quelconque des revendications 1 à 7, dans lequel le ratio en poids des blocs PA sur les blocs souples est compris dans la gamme de 0,3 à 10, de préférence de 0,3 à 6, de préférence de 0,3 à 3, de préférence de 0,3 à 2.

9. Utilisation d'un polycarbodiimide dans un procédé de fabrication de film à base de copolymère à blocs polyamides et blocs souples comportant au moins une fin de chaîne acide carboxylique, pour améliorer l'extrudabilité et/ou la capacité d'étirement du copolymère sous forme de film et/ou améliorer la vitesse d'extrusion dudit copolymère, dans laquelle au moins une fin de chaîne acide carboxylique du copolymère est bloquée par une fonction carbodiimide du polycarbodiimide et dans laquelle les blocs souples du copolymère sont choisis parmi : polyéther, polyester, polydiméthylsiloxane, polyoléfine, polycarbonate, et leurs mélanges ou copolymères.

10. Utilisation d'un polycarbodiimide dans un film à base copolymère à blocs polyamides et blocs souples comportant au moins une fin de chaîne acide carboxylique, pour améliorer l'étirabilité du film, la souplesse du film, sa résistance à l'abrasion, et sa résistance à la déchirure, dans laquelle au moins une fin de chaîne acide carboxylique du copolymère est bloquée par une fonction carbodiimide du polycarbodiimide et dans laquelle les blocs souples du copolymère sont choisis parmi : polyéther, polyester, polydiméthylsiloxane, polyoléfine, polycarbonate, et leurs mélanges ou copolymères.

11. Utilisation selon la revendication 9 ou 10, dans laquelle le polycarbodiimide est de masse moléculaire moyenne en poids supérieure à 10000 g/mol, de préférence comprise dans la gamme de 10000 à 40000 g/mol, de préférence de 15000 à 30000 g/mol, la masse moléculaire moyenne en poids étant déterminée par GPC dans le tétrahydrofurane.

12. Procédé de fabrication du film selon l'une des revendications 1 à 8, comprenant les étapes de :

a) mise à disposition du copolymère comportant au moins une fin de chaîne acide carboxylique bloquée par un polycarbodiimide, éventuellement en mélange avec d'autres composants du film tel que défini selon l'une des revendications 1 à 8,
b) extrusion du copolymère ou dudit mélange de l'étape a),
c) étirement du copolymère ou dudit mélange pour former un film.

13. Produit stratifié comprenant au moins un matériau textile, de préférence, se présentant sous la forme d'une membrane poreuse, d'un textile tissé ou d'un textile non tissé et au moins un film selon l'une des revendications 1 à 8, ledit film adhérant sur au moins une surface du matériau textile avec une force de pelage comprise dans la gamme de 0,5 à 50 N, de préférence de 0,5 à 10 N.

14. Stratifié selon la revendication 13, dans lequel ledit au moins un matériau textile comprend des fibres synthétiques, notamment des fibres synthétiques obtenues à partir de matières premières bio-ressourcées, des fibres naturelles, des fibres artificielles fabriquées à partir de matières premières naturelles, des fibres minérales, et/ou des fibres métalliques, ou constitue un feutre, un filtre, un film, une gaze, une toile, un pansement, une couche, un tissu, un tricot, un article d'habillement, un vêtement, un article de literie, un article d'ameublement, un rideau, un revêtement d'habitacle, un textile technique fonctionnel, un géotextile, et/ou un agrotextile.

15. Utilisation d'un film selon l'une quelconque des revendications 1 à 8 dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment.

16. Film selon l'une quelconque des revendications 1 à 8, ledit film étant un composant d'emballage, notamment agroalimentaire, un film d'emballage alimentaire, un film d'emballage pour cuisson et/ou fumage, notamment de saucisse,

un film imper-respirant, notamment utilisé dans le bâtiment, un composant textile, un composant d'équipement sportif, de chaussure, de chaussure de sport, de semelle de chaussure, de décoration, de bagage, de lunettes, de mobilier, d'équipement audio-visuel, informatique, d'équipement automobile ou aéronautique et/ou un composant d'équipement médical.

## Patentansprüche

1. Flexible, streckbare und wasserdichte und atmungsaktive Folie auf Blockcopolymerbasis, die mindestens einen starren Polyamid-, PA-, Block und mindestens einen flexiblen Block umfasst, der ausgewählt ist aus: einem Polyether, Polyester, Polydimethylsiloxan, Polyolefin, Polycarbonat und deren Mischungen oder Copolymeren, **dadurch gekennzeichnet, dass** das Copolymer mindestens ein Carbonsäure-Kettenende aufweist, das durch ein Polycarbodiimid blockiert ist, wobei die Flexibilität und die Streckbarkeit gemäß der Beschreibung ermittelt werden.

2. Folie nach Anspruch 1, wobei das Gewichtsmittel des Molekulargewichts des Polycarbodiimids größer als 10 000 g/mol ist, vorzugsweise im Bereich von 10 000 bis 40 000 g/mol, vorzugsweise von 15 000 bis 30 000 g/mol, liegt, wobei das Gewichtsmittel des Molekulargewichts mittels GPC in Tetrahydrofuran gemessen wird und/oder der Gewichtsgehalt des Polycarbodiimids von 0,5 bis 10 Gew.-%, vorzugsweise von 0,5 bis 7 Gew.-%, vorzugsweise von 0,5 bis 3 Gew.-%, vorzugsweise von 0,5 bis 2,5 Gew.-%, vorzugsweise von 0,5 bis 2 Gew.-%, bezogen auf das Gesamtgewicht des Copolymers, darstellt.

3. Folie nach Anspruch 1 oder 2, **dadurch gekennzeichnet, dass** das Copolymer in einer unvernetzten linearen Form vorliegt, seine Dispersität Mw/Mn kleiner als 3 ist, wobei die Dispersität gemäß der Beschreibung bestimmt wird.

4. Folie nach einem der Ansprüche 1 bis 3, wobei der Polyether ausgewählt ist aus: PTMG, PPG, P03G und/oder PEG; und/oder der Polyester ausgewählt ist aus: Polyesterdiolen, Poly(caprolacton) und auf Fettsäuredimeren basierenden Polyestern.

5. Folie nach einem der vorhergehenden Ansprüche, wobei das mindestens eine Copolymer von 45 bis 75 Gew.-% flexible Polyethylenglycol- (PEG-)Blöcke, vorzugsweise von 50 bis 70 Gew.-% PEG-Blöcke, bezogen auf das Gesamtgewicht des Copolymers, umfasst.

6. Folie nach einem der vorhergehenden Ansprüche, wobei der Polyamid-, PA-, Block zumindest eine der folgenden Polyamideinheiten umfasst: 6, 66, 610, 612, PA1010, PA1012, PA11, PA12, PA6/12, PA6/66 und deren Mischungen oder Copolyamide.

7. Folie nach einem der vorhergehenden Ansprüche, wobei das mindestens eine Copolymer ein Copolymer mit starren Polyamid-Blöcken und flexiblen Polyether-Blöcken (PEBA) umfasst, die vorzugsweise aus den folgenden PEBAs ausgewählt sind: PA6-PEG, PA1010-PEG, PA1012-PEG, PA11-PEG, PA12-PEG, PA6/12-PEG, PA66-PEG, PA6/66-PEG und Mischungen davon.

8. Folie nach einem der Ansprüche 1 bis 7, wobei das Gewichtsverhältnis der PA-Blöcke zu den flexiblen Blöcken im Bereich von 0,3 bis 10, vorzugsweise von 0,3 bis 6, vorzugsweise von 0,3 bis 3, vorzugsweise von 0,3 bis 2, liegt.

9. Verwendung eines Polycarbodiimids in einem Verfahren zur Herstellung einer Folie auf Copolymerbasis mit Polyamid-Blöcken und flexiblen Blöcken, die mindestens ein Carbonsäure-Kettenende aufweisen, zur Verbesserung der Extrudierbarkeit und/oder der Streckfähigkeit des Copolymers in Form einer Folie und/oder zur Verbesserung der Extrusionsgeschwindigkeit des Copolymers, wobei mindestens ein Carbonsäure-Kettenende des Copolymers durch eine Carbodiimidfunktion des Polycarbodiimids blockiert ist und wobei die flexiblen Blöcke des Copolymers ausgewählt sind aus: einem Polyether, Polyester, Polydimethylsiloxan, Polyolefin, Polycarbonat und deren Mischungen oder Copolymeren.

10. Verwendung eines Polycarbodiimids in einer Folie auf Copolymerbasis mit Polyamid-Blöcken und flexiblen Blöcken, die mindestens ein Carbonsäure-Kettenende aufweisen, zur Verbesserung der Streckbarkeit der Folie, der Flexibilität der Folie, ihrer Abriebfestigkeit und ihrer Reißfestigkeit, wobei mindestens ein Carbonsäure-Kettenende des Copolymers durch eine Carbodiimidfunktion des Polycarbodiimids blockiert ist und wobei die flexiblen Blöcke des Copolymers ausgewählt sind aus: einem Polyether, Polyester, Polydimethylsiloxan, Polyolefin, Polycarbonat und deren Mischungen oder Copolymeren.

**11.** Verwendung nach Anspruch 9 oder 10, wobei das Polycarbodiimid ein Gewichtsmittel des Molekulargewichts von mehr als 10 000 g/mol aufweist, es vorzugsweise im Bereich von 10 000 bis 40 000 g/mol, vorzugsweise von 15 000 bis 30 000 g/mol, liegt, wobei das Gewichtsmittel des Molekulargewichts mittels GPC in Tetrahydrofuran gemessen wird.

**12.** Verfahren zur Herstellung einer Folie nach einem der Ansprüche 1 oder 8, das die folgenden Schritte umfasst:

a) die Bereitstellung des Copolymers, das mindestens ein Carbonsäure-Kettenende aufweist, das durch ein Polycarbodiimid blockiert ist, gegebenenfalls als Mischung mit anderen Bestandteilen der Folie gemäß der Definition in einem der Ansprüche 1 bis 8,
b) die Extrusion des Copolymers oder der Mischung von Schritt a),
c) das Strecken des Copolymers oder der Mischung, um eine Folie zu bilden.

**13.** Laminatprodukt, das mindestens ein Textilmaterial, das vorzugsweise in Form einer porösen Membran, eines Gewebes oder eines Vliesstoffs vorliegt, und mindestens eine Folie nach einem der Ansprüche 1 bis 8 umfasst, wobei die Folie mit einer Abschälkraft im Bereich von 0,5 bis 50 N, vorzugsweise von 0,5 bis 10 N, an mindestens einer Fläche des Textilmaterials haftet.

**14.** Laminat nach Anspruch 13, wobei das mindestens eine Textilmaterial Synthesefasern, insbesondere aus biobasierten Ausgangsmaterialien erhaltene Synthesefasern, Naturfasern, aus natürlichen Ausgangsmaterialien hergestellte Kunstfasern, Mineralfasern und/oder Metallfasern umfasst oder einen Filz, einen Filter, eine Folie, eine Gaze, einen Stoff, einen Verband, eine Schicht, ein Gewebe, ein Gestrick, ein Kleidungsstück, eine Bekleidung, einen Bettwäscheartikel, ein Möbelstück, eine Gardine, eine Innenraumverkleidung, ein funktionelles technisches Textilerzeugnis, ein Geotextil und/oder ein Agrotextil darstellt.

**15.** Verwendung einer Folie nach einem der Ansprüche 1 bis 8 im medizinischen Bereich, in der Hygiene, bei Gepäck, bei der Herstellung, der Bekleidung, bei Haushaltsgeräten oder bei der Hausausstattung, für Möbel, Teppichboden, bei Kraftfahrzeugen, in der Industrie, insbesondere der industriellen Filtration, der Landwirtschaft und/oder bei Gebäuden.

**16.** Folie nach einem der Ansprüche 1 bis 8, wobei es sich bei der Folie um einen Verpackungsbestandteil, insbesondere eine Lebensmittelverpackung, eine Lebensmittelverpackungsfolie, eine Verpackungsfolie für das Garen und/oder Räuchern, insbesondere von Wurst, eine wasserdichte und atmungsaktive Folie, die insbesondere in einem Gebäude verwendet wird, eine Textilkomponente, Sportgeräte-, Schuh-, Sportschuh-, Schuhsohlen-, Dekorations-, Gepäck-, Brillen-, Mobiliar-, audiovisuelle Geräte-, Computer-, Automobilzubehör- oder luftfahrttechnische Ausrüstungskomponente und/oder eine Medizinproduktkomponente handelt.

## Claims

**1.** Flexible, stretchable and waterproof-breathable film based on a block copolymer comprising at least one rigid polyamide PA block and at least one flexible block chosen from: polyether, polyester, polydimethylsiloxane, polyolefin, polycarbonate, and mixtures or copolymers thereof, **characterized in that** said copolymer includes at least one carboxylic acid chain end blocked with a polycarbodiimide, the flexibility and stretchability being evaluated according to the description.

**2.** Film according to Claim 1, in which the weight-average molecular mass of the polycarbodiimide is greater than 10 000 g/mol, preferably within the range from 10 000 to 40 000 g/mol, preferably from 15 000 to 30 000 g/mol, the weight-average molecular mass being measured by GPC in tetrahydrofuran and/or the weight content of the polycarbodiimide represents from 0.5% to 10% by weight, preferably from 0.5% to 7% by weight, preferably from 0.5% to 3% by weight, preferably from 0.5% to 2.5%, preferably from 0.5% to 2% by weight, relative to the total weight of copolymer.

**3.** Film according to Claim 1 or 2, **characterized in that** said copolymer is in non-crosslinked linear form, its dispersity Mw/Mn being less than 3, the dispersity being determined according to the description.

**4.** Film according to any one of Claims 1 to 3, in which said polyether is chosen from: PTMG, PPG, PO3G and/or PEG; and/or said polyester is chosen from: polyester diols, poly(caprolactone) and polyesters based on fatty acid dimers.

5. Film according to any one of the preceding claims, in which said at least one copolymer comprises from 45% to 75% by weight of flexible polyethylene glycol (PEG) blocks, preferably from 50% to 70% by weight of PEG blocks, relative to the total weight of copolymer.

6. Film according to any one of the preceding claims, in which said polyamide PA block comprises at least one of the following polyamide units: 6, 66, 610, 612, PA1010, PA1012, PA11, PA12, PA6/12, PA6/66, and mixtures or copolyamides thereof.

7. Film according to any one of the preceding claims, in which said at least one copolymer comprises a copolymer containing rigid polyamide blocks and flexible polyether blocks (PEBA), preferably chosen from the following PEBAs: PA6-PEG, PA1010-PEG, PA1012-PEG, PA11-PEG, PA12-PEG, PA6/12-PEG, PA66-PEG, PA6/66-PEG, and mixtures thereof.

8. Film according to any one of Claims 1 to 7, in which the weight ratio of the PA blocks to the flexible blocks is within the range from 0.3 to 10, preferably from 0.3 to 6, preferably from 0.3 to 3, preferably from 0.3 to 2.

9. Use of a polycarbodiimide in a process for manufacturing a film based on a copolymer containing polyamide blocks and flexible blocks including at least one carboxylic acid chain end, for improving the extrudability and/or the drawability of the copolymer in film form and/or for improving the extrusion rate of said copolymer, in which at least one carboxylic acid chain end of the copolymer is blocked with a carbodiimide function of the polycarbodiimide and in which the flexible blocks of the copolymer are chosen from: polyether, polyester, polydimethylsiloxane, polyolefin, polycarbonate, and mixtures or copolymers thereof.

10. Use of a polycarbodiimide in a film based on a copolymer containing polyamide blocks and flexible blocks including at least one carboxylic acid chain end, for improving the stretchability of the film, the flexibility of the film, its abrasion resistance and its tear strength, in which at least one carboxylic acid chain end of the copolymer is blocked with a carbodiimide function of the polycarbodiimide and in which the flexible blocks of the copolymer are chosen from: polyether, polyester, polydimethylsiloxane, polyolefin, polycarbonate, and mixtures or copolymers thereof.

11. Use according to Claim 9 or 10, in which the polycarbodiimide has a weight-average molecular mass of greater than 10 000 g/mol, preferably within the range from 10 000 to 40 000 g/mol, preferably from 15 000 to 30 000 g/mol, the weight-average molecular mass being measured by GPC in tetrahydrofuran.

12. Process for manufacturing the film according to one of Claims 1 to 8, comprising the steps of:

a) providing the copolymer including at least one carboxylic acid chain end blocked with a polycarbodiimide, optionally as a mixture with other components of the film as defined according to one of Claims 1 to 8,
b) extruding the copolymer or said mixture from step a),
c) drawing the copolymer or said mixture to form a film.

13. Laminated product comprising at least one textile material, preferably, which is in the form of a porous membrane, a woven textile or a nonwoven textile and at least one film according to one of Claims 1 to 8, said film adhering to at least one surface of the textile material with a peel strength that is within the range from 0.5 to 50 N, preferably from 0.5 to 10 N.

14. Laminate according to Claim 13, in which said at least one textile material comprises synthetic fibres, notably synthetic fibres obtained from biobased raw materials, natural fibres, artificial fibres manufactured from natural raw materials, mineral fibres and/or metallic fibres, or constitutes a felt, a filter, a film, a gauze, a cloth, a dressing, a layer, a fabric, a knitted fabric, a clothing article, an item of clothing, a bedding article, a furnishing article, a curtain, a passenger compartment covering, a functional technical textile, a geotextile and/or an agrotextile.

15. Use of a film according to any one of Claims 1 to 8, in the following sectors: medical, hygiene, luggage, manufacturing, clothing, domestic or household equipment, furnishing, carpet, motor vehicle, industry, notably industrial filtration, agriculture and/or construction.

16. Film according to any one of Claims 1 to 8, said film being a wrapping component, notably in the agri-food sector, a food wrapping film, a wrapping film for cooking and/or smoking, notably for sausages, a waterproof-breathable film, notably used in construction, a textile component, a sports equipment, shoe, sports shoe, shoe sole, decorative,

luggage, spectacle, furniture, audiovisual equipment, information technology, motor vehicle or aeronautical equipment component and/or a medical equipment component.

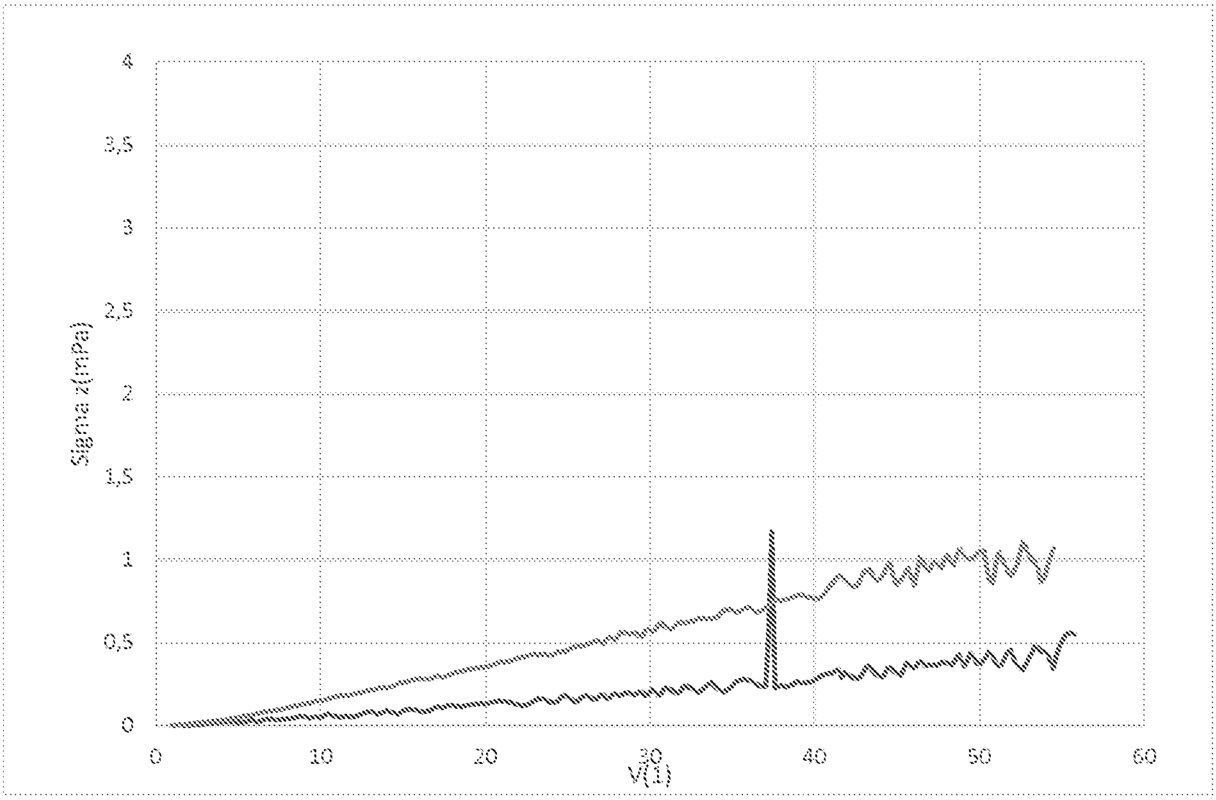


**Figure 1**

Rhéométrie élongationnelle

Copo 3 selon l'invention (courbe du haut)
comparé à PEBA 3 (courbe du bas)

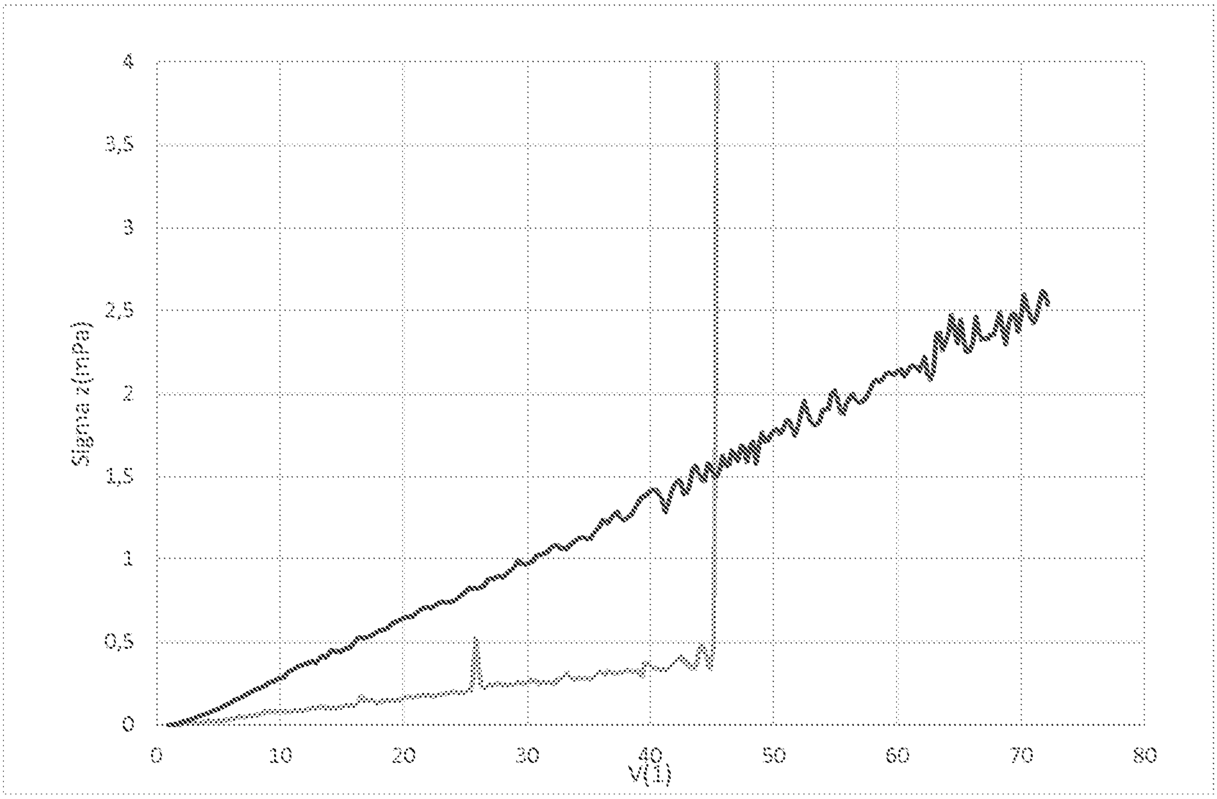


**Figure 2**

Rhéométrie élongationnelle

Copo 4 selon l'invention (courbe du haut)
comparé à PEBA 4 (courbe du bas)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2010003486 A
- US 2016229966 A
- US 6590065 B
- EP 613919 A
- JP 2004346274 B
- JP 2004352794 B
- EP 1482011 A
- FR 2846332
- JP HEI0362804 A
- US 6552131 B
- DE 2546534
- JP 1009225 A
- US 471203 A
- WO 9222600 A
- WO 9512629 A
- US 5130360 A
- US 5859166 A
- US 368493 A
- US 7456137 B
- US 20070278452 A
- US 20090176938 A
- US 5360888 A
- FR 3027907